# EUROPÄISCHE PATENTANMELDUNG

(11) **EP 0 988 918 A1**
(43) Veröffentlichungstag der Anmeldung: **29.03.2000**
(21) Anmeldenummer: 99118457.3
(22) Anmeldetag: 17.09.1999
(51) Int. Cl.: B23K 26/02

(54) **Verfahren und Vorrichtung zur temperaturgeregelten Wärmebehandlung von Werkstücken**

(30) Priorität: 23.09.1998 DE 19843556
(71) Anmelder: Kleiber, Heinz, 91093 Hessdorf (DE)
(72) Erfinder: Kleiber, Heinz, 91093 Hessdorf (DE)
(74) Vertreter: Gassner, Wolfgang, Dr.

(57) **Zusammenfassung**

Die Erfindung betrifft ein Verfahren zur temperaturgeregelten Wärmebehandlung von Werkstücken mittels Laser, bei dem die Temperatur auf der Oberfläche O des Werkstücks unter Verwendung mindestens einer ersten und einer zweiten Temperaturmeßeinrichtung gemessen wird, wobei ein erstes Meßfeld 4a der ersten Temperaturmeßeinrichtung und ein zweites Meßfeld 4b der zweiten Temperaturmeßeinrichtung innerhalb des vom Laserstahl L bestrahlten Bereichs und in der Nähe des Rands R des bestrahlten Bereichs angeordnet sind. Um ein Aufschmelzen im Bereich von Kanten des Werkstücks zuverlässig zu vermeiden ist erfindungsgemäß vorgesehen, daß das erste 4a und das zweite Meßfeld 4b in der Bewegungsrichtung B des vom Laserstrahl L bestrahlten Bereichs hintereinander angeordnet sind und daß die von jeder Temperaturmeßeinrichtung ermittelten Temperaturwerte miteinander verglichen und jeweils der höchste beim Vergleich ermittelte Temperaturwert als Istwert zur Regelung der Laserleistung verwendet wird.

## Beschreibung

Die Erfindung betrifft ein Verfahren und eine Vorrichtung zur temperaturgeregelten Wärmebehandlung von Werkstücken mittels Laser, nach dem Oberbegriff des Patentanspruchs 1.

Ein solches Verfahren bzw. eine Vorrichtung sind aus der EP 0 836 905 A1 bekannt. Bei der bekannten Vorrichtung sind das erste und das zweite Meßfeld in Bewegungsrichtung des vom Laserstrahl bestrahlten Bereichs nicht hintereinander angeordnet. Die von jeder Temperaturmeßeinrichtung ermittelten Temperaturwerte werden nicht miteinander verglichen und der jeweils höchste beim Vergleich ermittelte Temperaturwert wird hier nicht als Istwert zur Regelung der Laserleistung verwendet. Mit dem bekannten Verfahren bzw. der bekannten Vorrichtung kann eine Überhitzung im Bereich einer Kante eines Werkstücks nicht rechtzeitig erkannt werden. Es gelingt daher nicht durch eine entsprechende Regelung ein Aufschmelzen im Kantenbereich zu vermeiden.

Bei der aus der DE 43 01 689 A1 bekannten Vorrichtung wird die Laserleistung aus Halbleiterlasern gewonnen. Die Laserleistung wird über Lichtleitfasern ausgekoppelt. Zwischen diesen Lichtleitfasern sind weitere Lichtleitfasern zur Abbildung der zwischen den bestrahlten Bereichen befindlichen Oberflächen des Werkstücks auf eine Temperaturmeßeinrichtung vorgesehen. Die Meßfelder befinden sich hier nicht innerhalb des von den Laserstrahlen bestrahlten Bereichs. Folgerichtig wird mit der bekannten Anordnung der Meßfelder stets eine zu niedrige Temperatur gemessen. Es kann also im Bereich der Kante eines Werkstücks zum partiellen Aufschmelzen kommen.

Nach dem Stand der Technik ist es weiter bekannt zur Steuerung der Laserleistung beim Laserhärten die Temperatur auf der Oberfläche des Werkstücks innerhalb des vom Laserstrahl bestrahlten Bereichs zu messen. Die Messung erfolgt in der Regel mittels eines Pyrometers, dessen Meßfeld deutlich kleiner als der vom Laserstrahl bestrahlte Bereich ist. Die Temperatur des übrigen Bereichs wird durch Integration ermittelt. Das bekannte Verfahren ermöglicht nur dann eine gleichmäßige Wärmebehandlung, wenn das Werkstück eine ebene Oberfläche aufweist und aus einem homogenen Material hergestellt ist. Sobald der Laserstrahl den Bereich einer Kante überfährt, kommt es zu einem veränderten Wärmeabfluss. Die Temperatur steigt im Bereich der Kante stark an. Es kommt dort zu einem unerwünschten partiellen Aufschmelzen des Werkstücks.

Zu Vermeidung dieses Nachteils ist es auch versucht worden, die Bewegungsgeschwindigkeit des Lasers auf der Oberfläche des Werkstücks in Abhängigkeit von dessen Geometrie zu steuern. Das erfordert allerdings die Herstellung aufwendiger Steuerprogramme. Ein partielles Aufschmelzen bestimmter Bereiche hat auch damit nicht wirkungsvoll verhindert werden können.

Aufgabe der Erfindung ist es, die Nachteile nach dem Stand der Technik zu beseitigen. Insbesondere sollen ein Verfahren und eine Vorrichtung zur Wärmebehandlung von Werkstücken mittels Laser angegeben werden, mit denen ein Aufschmelzen im Bereich einer Kante eines Werkstücks zuverlässig vermieden werden kann.

Diese Aufgabe wird durch die Merkmale der Ansprüche 1 und 6 gelöst. Zweckmäßige Ausgestaltungen der Erfindung ergeben sich aus den Merkmalen der Ansprüche 2 bis 5 und 7 bis 13.

Nach Maßgabe der Erfindung ist ein vorgesehen, daß das erste und das zweite Meßfeld in der Bewegungsrichtung des vom Laserstrahl bestrahlten Bereichs hintereinander angeordnet sind und daß die von jeder Temperaturmeßeinrichtung ermittelten Temperaturwerte miteinander verglichen und jeweils der höchste beim Vergleich ermittelte Temperaturwert als Istwert zur Regelung der Laserleistung verwendet wird.

Durch die Anordnung des ersten und zweiten Meßfelds hintereinander in der Bewegungsrichtung des vom Laserstrahl bestrahlten Bereichs sowie den Vergleich der von jeder Temperaturmeßeinrichtung ermittelten Temperatur kann eine im Bereich einer Kante auftretende unzulässige Temperaturerhöhung sofort erkannt und die Laserleistung entsprechend heruntergeregelt werden. Dadurch wird ein partielles Aufschmelzen der Kante sicher vermieden. Es sind dazu in Bewegungsrichtung lediglich zwei Meßfelder erforderlich.

Das ermöglicht überraschenderweise eine besonders gleichmäßige Wärmebehandlung von Werkstücken mittels Laser. Die Wärmebehandlung ist einfach, schnell und kostengünstig durchzuführen. Ein Aufschmelzen im Bereich von Kanten wird zuverlässig vermieden. Die Erstellung besonderer Steuerprogramme zur werkstückgeometrieabhängigen Steuerung des Laserstrahls ist nicht erforderlich.

Vorteilhafterweise bildet der bestrahlte Bereich einen Kreis und das erste und das zweite Meßfeld sind symmetrisch bezüglich des Kreismittelpunkts angeordnet. Selbstverständlich kann der bestrahlte Bereich auch oval oder rechteckig, z.B. quadratisch, ausgebildet sein.

Eine weitere Erhöhung der Genauigkeit der im bestrahlten Bereich herrschenden Temperaturverteilung kann erzielt werden, indem eine Vielzahl von Meßfeldern geradlinig hintereinander über einen Durchmesser oder eine Länge bzw. Breite des bestrahlten Bereichs vorgesehen ist.

Der Laserstrahl kann entlang eines vorgegebenen Wegs über die Oberfläche des Werkstücks bewegt werden. So ist es möglich, vorgegebene Zonen zu härten oder auch Werkstücke miteinander zu verschweißen.

Nach einem weiteren Ausgestaltungsmerkmal sind das erste und das zweite Meßfeld auf einer Geraden quer zur Bewegungsrichtung angeordnet. Eine solche Anordnung eignet sich insbesondere zur Erfassung der Temperaturverteilung quer zu einer mittels dem Laserstrahl hergestellten Schweißnaht.

Ein Öffnungsquerschnitt einer mit der Temperaturmeßeinrichtung verbundenen Lichtwellenleitung kann mittels einer optischen Einrichtung auf das korrespondierende Meßfeld abgebildet werden.Dadurch wird die Temperatur innerhalb des vom Laserstrahl bestrahlten Bereichs gemessen. Bei der optischen Einrichtung kann es sich zweckmäßigerweise um eine Laseroptik handeln. Es kann aber auch eine separate optische Einrichtung zur Abbildung der Öffnungsquerschnitte vorgesehen sein. Die Temperaturmeßeinrichtung kann eine Strahlungsmeßeinrichtung, vorzugsweise ein Pyrometer, sein. Das ermöglicht eine Temperaturmessung mit besonders hoher Zeitauflösung.

Nach weiterer Maßgabe der Erfindung ist eine Vorrichtung zur Durchführung des Verfahrens vorgesehen, bei der das erste und das zweite Meßfeld in der Bewegungsrichtung des vom Laserstrahl bestrahlten Bereichs hintereinander angeordnet sind, und eine Einrichtung zum Vergleich der von den Temperaturmeßeinrichtungen ermittelten Temperaturwerte, eine Einrichtung zur Regelung der Laserleistung und ein Mittel zur Auswahl des jeweils höchsten beim Vergleich ermittelten Temperaturwerts als Istwert zur Regelung der Laserleistung vorgesehen sind. Die erfindungsgemäße Anordnung sowie die Einrichtungen ermöglichen eine besonders exakte Regelung der Laserleistung und damit eine sehr gleichmäßige Wärmebehandlung des Werkstücks. Ein Aufschmelzen im Bereich von Kanten wird vermieden.

Nach einem weiteren Ausgestaltungsmerkmal sind die Meßfelder ausschließlich in der Nähe des Rands des bestrahlten Bereichs angeordnet. Damit kann auch bei einer schnellen Änderung der Bewegungsrichtung des Laserstrahls ein Aufschmelzen im Bereich von Kanten des Werkstücks sicher vermieden werden. Das Vorsehen von Meßfeldern in der Nähe des Zentrums des bestrahlten Bereichs ist dazu nicht erforderlich. Es kann also mit relativ wenigen Meßfeldern zuverlässig eine von der Geometrie des Werkstücks abhängige Regelung der Laserleistung realisiert werden.

Vorteilhafte Ausgestaltungen der Erfindung werden anhand der nachfolgenden Zeichnungen näher erläutert. Hierin zeigen:
- Fig. 1: eine schematische Darstellung einer Vorrichtung mit zwei Meßfeldern,
- Fig. 1a: eine erste Draufsicht gemäß Fig. 1,
- Fig. 1b: eine zweite Draufsicht gemäß Fig. 1 und
- Fig. 2: einen weiteren Bereich mit vier Meßfeldern.

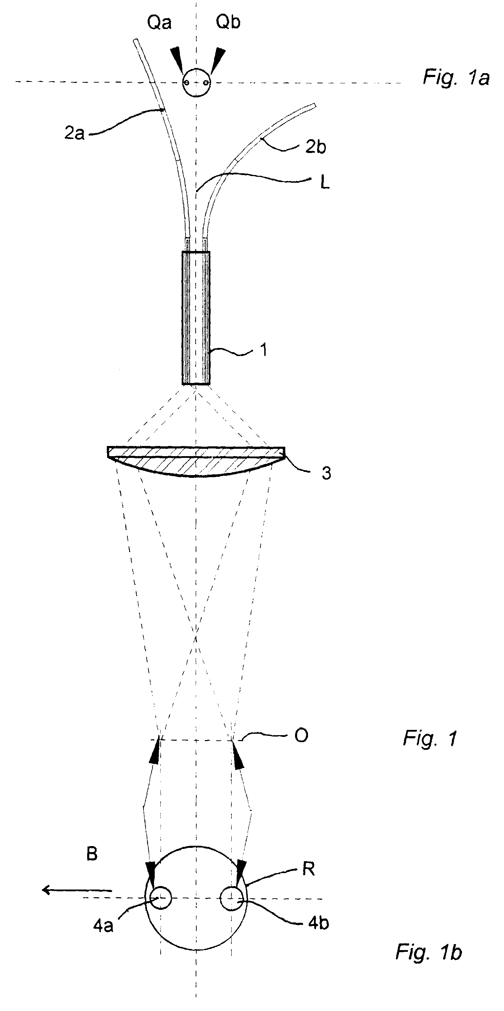

In den Fig. 1, 1a und 1b ist eine Vorrichtung im Querschnitt sowie in teilweiser Draufsicht gezeigt. Mit 1 ist eine zylindrische Fassung bezeichnet, in der eine erste 2a und eine zweite 2b Lichtleitfaser aufgenommen sind. Jede Lichtleitfaser 2a, 2b ist jeweils mit einem (hier nicht dargestellten) Pyrometer verbunden. Ein Öffnungsquerschnitt der Lichtfasern 2a, 2b ist mit Qa bzw. Qb bezeichnet. In der Fassung 1 ist eine Linse 3 nachgeschaltet.

Fig. 1a zeigt eine Draufsicht auf die Fassung 1; Fig. 1b zeigt eine Draufsicht auf die Abbildung der Fassung 1 auf einer Oberfläche O eines Werkstücks. Dabei wird ein von einem Laserstrahl L beleuchteter kreisrunder Bereich durch den Rand R begrenzt. Die Abbildungen der Öffnungsquerschnitte Qa, Qb bilden die Meßfelder 4a bzw. 4b.

Die Funktion der Vorrichtung ist folgende:

Ein in einer hier nicht gezeigten Vorrichtung erzeugter Laserstrahl L durchquert einen axialen Durchgang der Fassung 1. Er wird mittels der Linse 3 gebrochen und trifft auf die Oberfläche O des Werkstücks auf. Der vom Laserstrahl L beleuchtete Bereich ist durch den Rand R begrenzt. Der Bereich weist einen Durchmesser von vorzugsweise 6 bis 10 mm auf.

Ebenfalls durch die Linse 3 werden die Öffnungsquerschnitte Qa, Qb der Lichtleitfasern 2a und 2b auf die Oberfläche O des Werkstücks abgebildet. Die Abbildungen bilden ein erstes 4a und ein zweites kreisförmiges Meßfeld 4b, welche vom Rand R umgeben sind. Die Meßfelder 4a, 4b befinden sich in der Nähe des Rands R auf einer Achse, welche einer Bewegungsrichtung B des Laserstrahls L entspricht und durch den Mittelpunkt des durch den Rand R gebildeten Kreises verläuft.

Die Bewegung des Laserstrahls L und der Meßfelder 4a, 4b über die Oberfläche O kann durch hier nicht dargestellte Schwingspiegel erfolgen. Dabei wird fortlaufend die Temperatur in den Meßfeldern 4a, 4b pyrometrisch gemessen. Die gemessenen Temperaturen werden verglichen. Die Maximaltemperatur dient als Istwert zur Regelung der Laserleistung und damit zur Regelung der auf der Oberfläche O mittels Lasereinwirkung erzeugten Temperatur.

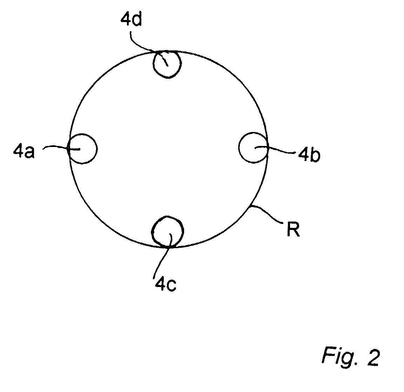

Fig. 2 zeigt eine Draufsicht auf einen weiteren Bereich, dessen Rand R vier Meßfelder 4a, 4b, 4c und 4d umgibt. Eine solche Anordnung ist besonders universell. Sie eignet sich insbesondere für eine Bewegung des Laserstrahls L in zwei aufeinander senkrecht stehende Bewegungsrichtungen.

### Bezugszeichenliste

- 1: Fassung
- 2a, 2b: Lichtleitfaser
- 3: Linse
- 4a, 4b, 4c, 4d: Meßfeld
- R: Rand
- O: Oberfläche
- B: Bewegungsrichtung
- Qa, Qb: Öffnungsquerschnitt
- L: Laserstahl

## Patentansprüche

1. Verfahren zur temperaturgeregelten Wärmebehandlung von Werkstücken mittels Laser, bei dem die Temperatur auf der Oberfläche (O) des Werkstücks unter Verwendung mindestens einer ersten und einer zweiten Temperaturmeßeinrichtung gemessen wird, wobei ein erstes Meßfeld (4a) der ersten Temperaturmeßeinrichtung und ein zweites Meßfeld (4b) der zweiten Temperaturmeßeinrichtung innerhalb des vom Laserstahl (L) bestrahlten Bereichs und in der Nähe des Rands (R) des bestrahlten Bereichs angeordnet sind, **dadurch gekennzeichnet**,
daß das erste (4a) und das zweite Meßfeld (4b) in der Bewegungsrichtung (B) des vom Laserstrahl (L) bestrahlten Bereichs hintereinander angeordnet sind und daß
die von jeder Temperaturmeßeinrichtung ermittelten Temperaturwerte miteinander verglichen und jeweils der höchste beim Vergleich ermittelte Temperaturwert als Istwert zur Regelung der Laserleistung verwendet wird.

2. Verfahren nach Anspruch 1, wobei der bestrahlte Bereich einen Kreis bildet und das erste (4a) und das zweite Meßfeld (4b) symmetrisch bezüglich des Kreismittelpunkts angeordnet sind.

3. Verfahren nach einem der vorhergehenden Ansprüche, wobei der Laserstrahl (L) entlang eines vorgegebenen Wegs über die Oberfläche (O) des Werkstücks bewegt wird.

4. Verfahren nach einem der vorhergehenden Ansprüche, wobei ein Öffnungsquerschnitt (Qa, Qb) eines mit der Temperaturmeßeinrichtung verbundenen Lichtwellenleiters (2a, 2b) mittels einer optischen Einrichtung (3) auf das korrespondierende Meßfeld (4a, 4b) abgebildet wird.

5. Verfahren nach einem der vorhergehenden Ansprüche, wobei die Temperaturmeßeinrichtung eine Strahlungsmeßeinrichtung, vorzugsweise ein Pyrometer, ist.

6. Vorrichtung zur Durchführung des Verfahrens nach Anspruch 1, mit einer Einrichtung zur Erzeugung eines Laserstrahls (L) und mit mindestens einer ersten und einer zweiten Temperaturmeßeinrichtung, wobei ein erstes Meßfeld (4a) der ersten Temperaturmeßeinrichtung und ein zweites Meßfeld (4b) der zweiten Temperaturmeßeinrichtung innerhalb des vom Laserstrahl (L) bestrahlten Bereichs und in der Nähe des Rands (R) des bestrahlten Bereichs angeordnet sind, **dadurch gekennzeichnet,** daß
das erste (4a) und das zweite Meßfeld (4b) in der Bewegungsrichtung (B) des vom Laserstrahl (L) bestrahlten Bereichs hintereinander angeordnet sind, und
daß eine Einrichtung zum Vergleich der von den Temperaturmeßeinrichtungen ermittelten Temperaturwerte, eine Einrichtung zur Regelung der Laserleistung und ein Mittel zur Auswahl des jeweils höchsten beim Vergleich ermittelte Temperaturwerts als Istwert zur Regelung der Laserleistung vorgesehen sind.

7. Vorrichtung nach Anspruch 6, wobei der bestrahlte Bereich einen Kreis bildet und das erste (4a) und das zweite Meßfeld (4b) symmetrisch bezüglich des Kreismittelpunkts angeordnet sind.

8. Vorrichtung nach einem der Ansprüche 6 oder 7, wobei eine Einrichtung zum Bewegen des Laserstahls (L) entlang eines vorgegebenen Wegs auf der Oberfläche (O) des Werkstücks vorgesehen ist.

9. Vorrichtung nach einem der Ansprüche 6 bis 8, wobei eine optische Einrichtung (3) zur Abbildung eines Öfffnungsquerschnitts (Qa, Qb) eines mit der Temperaturmeßeinrichtung verbundenen Lichtguellenleiters (2a, 2b) auf das korrespondierende Meßfeld (4a, 4b) vorgesehen ist.

10. Vorrichtung nach einem der Ansprüche 6 bis 9, wobei die Temperaturmeßeinrichtung eine Strahlungsmeßeinrichtung, vorzugsweise ein Pyrometer, ist.

11. Vorrichtung nach einem der Ansprüche 6 bis 9, wobei die optische Einrichtung (3) mindestens einen Schwingspiegel aufweist.

12. Vorrichtung nach einem der 6 bis 11, wobei die Meßfelder (4a, 4b, 4c, 4d) einen Durchmesser von weniger als 2 mm, vorzugsweise etwa 1 mm, aufweisen.

13. Vorrichtung nach einem der Ansprüche 6 bis 12, wobei der vom Laser bestrahlte Bereich einen Durchmesser von 6 bis 10 mm aufweist.
